# FASCICULE DE BREVET EUROPEEN

(11) **EP 1 448 627 B1**
(45) Date de publication et mention de la délivrance du brevet: **31.12.2008**
(21) Numéro de dépôt: 02793157.5
(22) Date de dépôt: 04.10.2002
(51) Int. Cl.: C08F 20/58

(54) **POLYMERE DE TRIS(HYDROXYMETHYL) ACRYLAMIDOMETHANE, LATEX INVERSE ET MICROLATEX EN CONTENANT, UTILISATION DESDITS POLYMERE, LATEX INVERSE ET MICROLATEX INVERSE**
TRIS(HYDROXYMETHYL)ACRYLAMIDOMETHAN-POLYMER, DIESES ENTHALTENER INVERSER LATEX UND MIKROLATEX, VERWENDUNG DES POLYMERS, DES INVERSEN LATEX UND DES MIKROLATEX
TRIS(HYDROXYMETHYL) ACRYLAMIDOMETHANE POLYMER, INVERSE LATEX AND MICROLATEX CONTAINING SAME, USE OF SAID POLYMER, INVERSE LATEX AND MICROLATEX

(30) Priorité: 17.10.2001 FR 0113361
(43) Date de publication de la demande: 25.08.2004
(60) Demande divisionnaire: 08166824.6
(73) Titulaire: SOCIETE D'EXPLOITATION DE PRODUITS POUR LES INDUSTRIES CHIMIQUES-SEPPIC, F-75321 Paris Cédex 07 (FR)
(72) Inventeur: BRAUN, Olivier, F- 81710 Naves (FR); MALLO, Paul, F-78400 Chatou (FR); PUCCI, Bernard, F-13640 Mollégès (FR); TABACCHI, Guy, F-75007 Paris (FR)
(74) Mandataire: Conan, Philippe Claude
(86) Numéro de dépôt international: PCT/FR2002/003394
(87) Numéro de publication internationale: WO 2003/033553

(56) Documents cités:
- EP-A- 0 040 124
- WO-A-88/09981
- FR-A- 2 785 801
- MATSUDA T ET AL: "SYNTHESIS OF MULTIFUNCTIONAL, NONIONIC VINYL POLYMERS AND THEIR 13C SPIN-LATTICE RELAXATION TIMES IN DEUTERIUM OXIDE SOLUTIONS" , MACROMOLECULES, AMERICAN CHEMICAL SOCIETY. EASTON, US, VOL. 29, NR. 16, PAGE(S) 5375-5383 XP000596758 ISSN: 0024-9297 le document en entier

## Description

La présente demande de brevet concerne de nouveaux polymères, des latex inverses et des microlatex inverses eau dans huile les contenant leur procédé de préparation et leur utilisation comme agent épaississant floculant, super-absorbant ou modificateur de rhéologie.

A l'occasion de recherches sur la mise au point de nouveaux agent épaississants floculants ou super absorbants ayant une stabilité prolongée dans le temps, la demanderesse s'est intéressée aux polymères du N-[2-hydroxy 1,1-bis(hydroxyméthyl) éthyl] propénamide, dénommé aussi tris(hydroxyméthyl) acrylamidométhane ou THAM :

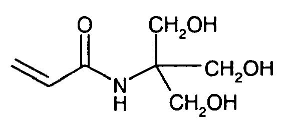

Le THAM est décrit dans la demande de brevet européen publiée sous le numéro EP 0 900 786.

Selon un premier aspect de la présente invention, celle-ci a pour objet un polymère linéaire ou réticulé, caractérisé en ce qu'il est susceptible d'être obtenu soit, par homopolymérisation du N-[2-hydroxy-1,1-bis(hydroxyméthyl)-éthyl]-propénamide, soit par copolymérisation du N-[2-hydroxy-1,1-bis(hydroxyméthyl)-éthyl]-propénamide avec un ou plusieurs monomères choisis parmi les monomères cationiques, les monomères comportant au moins une fonction acide fort, partiellement salifiée ou totalement salifiée, les monomères comportant au moins une fonction acide faible, partiellement salifiée ou totalement salifiée ou les monomères neutres.

Par polymère réticulé, on désigne un polymère non linéaire se présentant à l'état de réseau tridimensionnel insoluble dans l'eau, mais gonflable dans l'eau et conduisant donc à l'obtention d'un gel chimique.

Par salifiée, on désigne pour les fonctions acides forts ou faibles, les sels de métaux alcalins tels, que le sel de sodium, le sel de potassium ou les sels de base azotée, tels que par exemple le sel d'ammonium ou le sel de monoéthanolamine (HO-CH₂-CH₂-NH₃⁺).

Par copolymérisation, on signifie que la réaction de polymérisation met en oeuvre au deux monomères différents. Elle peut notamment mettre en oeuvre trois ou plus de trois monomères différents.

Lorsque la réaction de polymérisation conduisant au copolymère objet de la présente invention, met en oeuvre un ou plusieurs monomères comportant une fonction acide fort, il s'agit généralement de la fonction acide sulfonique ou de la fonction acide phosphonique lesdites fonctions étant partiellement ou totalement salifiées. Ledit monomère peut être par exemple, l'acide styrènesulfonique, le méthacrylate de (2-sulfo éthyle), l'acide styrènephosphonique, partiellement ou totalement salifiée ou de préférence l'acide 2-méthyl 2-[(1-oxo 2-propènyl) amino] 1-propanesulfonique partiellement ou totalement salifiée sous forme d'un sel de métal alcalin tel que par exemple, le sel de sodium ou le sel de potassium, de sel d'ammonium, d'un sel d'un amino alcool tel que par exemple le sel de monoéthanolamine ou d'un sel d'aminoacide tel que, par exemple, le sel de lysine.

Lorsque la réaction de polymérisation conduisant au copolymère objet de la présente invention, met en oeuvre un ou plusieurs monomères comportant une fonction acide faible il s'agit généralement de la fonction acide carboxylique ; lesdits monomères sont plus particulièrement choisis parmi l'acide acrylique, l'acide méthacrylique, l'acide itaconique, l'acide maléique partiellement ou totalement salifié ou l'acide 3-méthyl 3-[(1-oxo 2-propènyl) amino] butanoïque, partiellement salifié ou totalement salifié.

Lorsque la réaction de polymérisation conduisant au copolymère objet de la présente invention, met en oeuvre un ou plusieurs monomères neutres, ils sont plus particulièrement choisis parmi l'acrylamide, le méthacrylamide, le vinylpyrrolidone, le diacétoneacrylamide, l'acrylate de (2-hydroxy éthyle), l'acrylate de (2,3-dihydroxy propyle), le méthacrylate de (2-hydroxy éthyle), le méthacrylate de (2,3-dihydroxy propyle) ou un dérivé éthoxylé de poids moléculaire compris entre 400 et 1000, de chacun de ces esters.

Lorsque la réaction de polymérisation conduisant au copolymère objet de la présente invention, met en oeuvre un ou plusieurs monomères cationiques, il s'agit plus particulièrement de monomères comportant un ou plusieurs groupes ammonium ou des précurseurs aminés de ces monomères ; comme, par exemple, le chlorure de 2,N,N,N-tétraméthyl 2-[(1-oxo 2-propènyl) amino] propanammonium (AMPTAC), le chlorure de 2,N,N-triméthyl 2-[(1-oxo 2-propènyl) amino] propanammonium, le chlorure de N,N,N-triméthyl 3-[(1-oxo 2-propènyl) amino] propanammonium (APTAC), le chlorure de diallyl diméthylammonium (DADMAC), le chlorure de N,N,N-triméthyl 2-[(1-oxo 2-propènyl)] éthanammonium, le chlorure de N,N,N-triméthyl 2-[(1-oxo 2- méthyl 2-propènyl)] éthanammonium, le N-[2-(diméthylamino) 1,1-diméthyl] acrylamide, le N-[2-(méthylamino) 1,1-diméthyl] acrylamide, l'acrylate de 2-(diméthylamino) éthyle, le méthacrylate de 2-(diméthylamino) éthyle ou le N-[3-(diméthylamino) propyl] acrylamide.

L'invention a plus particulièrement pour objet, les polymères suivants :

les homopolymères de THAM, les copolymères de THAM et d'acide 2-méthyl 2-[(1-oxo 2-propènyl) amino] 1-propanesulfonique partiellement ou totalement salifié sous forme de sel de sodium ou de sel d'ammonium, les copolymères de THAM et d'acide acrylique partiellement salifié sous forme de sel de sodium ou de sel d'ammonium, les copolymères de THAM et d'acide méthacrylique partiellement salifié sous forme de sel de sodium ou de sel d'ammonium, les terpolymères de THAM, d'acide acrylique et d'acrylamide partiellement salifié sous forme de sel de sodium ou de sel d'ammonium, les copolymères de THAM et d'acide 2-méthyl 2-[(1-oxo 2-propènyl) amino] 1-propanesulfonique partiellement ou totalement salifié sous forme de sel de sodium ou de sel d'ammonium, les copolymères de THAM et d'AMPTAC, les copolymères de THAM et d'APTAC, les copolymères de THAM et de DADMAC, les copolymères de THAM et d'acrylate de 2-(diméthylamino) éthyle, les copolymères de THAM et de méthacrylate de 2-(diméthylamino) éthyle, les terpolymères de THAM, et d'AMPTAC et d'acrylamide, les terpolymères de THAM, et d'AMPTAC et de diacétoneacrylamide, les terpolymères de THAM, d'APTAC et d'acrylamide, les terpolymères de THAM, de DADMAC et de diacétoneacrylamide, les terpolymères de THAM, d'acrylate de 2-(diméthylamino) éthyle et d'acrylamide ou les terpolymères de THAM, de méthacrylate de 2-(diméthylamino) éthyle et de diacétoneacrylamide.

Selon un aspect particulier de la présente invention, les polymères tels que définis précédemment sont des polymères linéaires.

Selon un autre aspect particulier de la présente invention, les polymères tels que définis précédemment sont des polymères réticulés par un agent de réticulation choisi parmi les composés diéthyléniques ou polyéthyléniques, et tout particulièrement parmi l'acide diallyloxyacétique ou un des sels et notamment son sel de sodium, le triallylamine, le triméthylol propanetriacrylate, le diméthacrylate d'éthylèneglycol, le diacrylate de diéthylène glycol, le diallylurée ou le méthylène bis(acrylamide). L'agent de réticulation est généralement utilisé dans la proportion molaire exprimée par rapport aux monomères mis en oeuvre, de 0,005 % à 1 %, notamment de 0,01 % à 0,2 % et plus particulièrement de 0,01 % à 0,1 %.

Les polymères tels que définis précédemment, ont une proportion molaire, exprimée par rapport aux monomères mis en oeuvre, en monomère THAM généralement supérieure ou égale à 5 %, plus particulièrement supérieure ou égale à 10 % et tout particulièrement supérieure ou égale à 20 %.

Selon un second aspect de la présente invention, celle-ci a pour objet une composition comprenant une phase huile, une phase aqueuse, au moins un agent émulsifiant de type eau dans huile (E/H), au moins un agent émulsifiant de type huile dans eau (H/E), sous forme d'un latex inverse auto-inversible comprenant de 20 % à 70 % en poids, et de préférence de 25 % à 40 % en poids, d'un polymère tel que défini précédemment.

Le latex inverse selon l'invention contient généralement de 2,5 % à 15 % en poids, et de préférence de 4 % à 9 % en poids, d'agents émulsifiants, parmi lesquels de 20 % à 50 %, notamment de 25 % à 40 % du poids total des agents émulsifiants présents sont du type eau dans huile (E/H) et dans laquelle de 80 % à 50 %, notamment de 75 % à 60 %, du poids total des agents émulsifiants, sont du type huile dans eau (H/E).

Dans le latex inverse tel que défini précédemment, la phase huile représente généralement de 15 % à 50 %, de préférence de 20 % à 25 %, de son poids total. Le latex inverse contient entre 5 % et 60 % en poids, d'eau et plus particulièrement entre 20 % et 50 % en poids d'eau. Le latex selon l'invention peut également contenir divers additifs tels que des agents complexants ou des agents limiteurs de chaîne.

Selon un troisième aspect de la présente invention, celle-ci a pour objet une composition comprenant une phase huile, une phase aqueuse, au moins un agent émulsifiant de type eau dans huile (E/H), au moins un agent émulsifiant de type huile dans eau (H/E), sous forme d'un microlatex inverse auto-inversible comprenant de 10 % à 50 % en poids, et de préférence de 10 % à 30 % en poids, d'un polymère tel que défini précédemment.

Le microlatex inverse selon l'invention contient généralement de 5 % à 10 % en poids, d'un mélange de tensioactifs de type (E/H) et de type (H/E) ayant un nombre HLB global supérieur ou égal à 9. La phase huile représente généralement de 15 % à 50 %, de préférence de 20 % à 25 %, de son poids total.

Par "agent émulsifiant du type eau dans huile", on désigne des agents émulsifiants possédant une valeur HLB suffisamment faible pour fournir des émulsions eau dans huile, tels que les polymères tensioactifs commercialisés sous le nom de HYPERMER^{™} ou tels que les esters de sorbitan, comme le monooléate de sorbitan commercialisé par la Société SEPPIC sous le nom MONTANE ^{™} 80, l'isostéarate de sorbitan commercialisé par SEPPIC sous le nom MONTANE ^{™} 70 ou le sesquioléate de sorbitan commercialisé par SEPPIC sous le nom de MONTANE^{™}83. Lorsqu'il s'agit d'un mélange d'agents émulsifiants du type eau dans huile, la valeur HLB à prendre en considération est celle dudit mélange.

Par "agent émulsifiant du type huile dans eau", des agents émulsifiants possédant une valeur HLB suffisamment élevée pour fournir des émulsions huile dans l'eau tels que, par exemple, les esters de sorbitan éthoxylés comme l'oléate de sorbitan éthoxylé à 20 moles d'oxyde d'éthylène, l'huile de ricin éthoxylée à 40 moles d'oxyde d'éthylène, le laurate de sorbitan éthoxylé à 20 moles d'oxyde d'éthylène commercialisés par la société SEPPIC respectivement sous les noms MONTANOX^{™} 80, SIMULSOL^{™} OL 50 et MONTANOX^{™} 20, l'alcool laurique éthoxylé à 7 moles d'oxyde d'éthylène commercialisé par la société SEPPIC sous le nom SIMULSOL^{™} P7, l'alcool oléocétylique décaéthoxylé d'éthylène commercialisé par la société SEPPIC sous le nom SIMULSOL^{™} OC 710 ou les hexaoléates de sorbitan polyéthoxylés commercialisés par la société ATLAS chemical Industries sous les noms G-1086 et G-1096, les nonylphénol éthoxylés ou les alkyl polyglucosides de formules (I) :

R₁-O-(G)ₓ-H (I)

tels que le SIMULSOL^{™}SL 8, commercialisé par la société SEPPIC, qui est une solution aqueuse contenant entre environ 35 % et 45 % en poids d'un mélange d'alkyl polyglucosides consistant en entre 45 % en poids et 55 % en poids d'un composé de formule (I), dans laquelle x est égal à environ 1,45 et R₁ représente un radical décyle, et entre 45 % en poids et 55 % en poids d'un composé de formule (I), dans laquelle x est égal à environ 1,45 et R₁ représente un radical octyle ; le SIMULSOL^{™} SL10, commercialisé par la société SEPPIC, qui est une solution aqueuse contenant entre environ 50 % et poids et 60 % en poids d'un mélange d'alkyl polyglucosides, consistant en environ 85 % en poids d'un composé de formule (I), dans laquelle x est égal à environ 1,45 et R₁ représente un radical décyle, environ 7,5 % en poids d'un composé de formule (I), dans laquelle x est égal à environ 1,45 et R₁ représente un radical dodécyle et environ 7,5 % en poids d'un composé de formule (I), dans laquelle x est égal à environ 1,45 et R₁ représente un radical tétradécyle ; le SIMULSOL^{™} SL11, commercialisé par la société SEPPIC, qui est une solution aqueuse contenant entre environ 50 % et poids et 60 % en poids d'un mélange d'alkyl polyglucosides de formule (I), dans laquelle x est égal à environ 1,45 et R₁ représente un radical undécyle ou le SI-MULSOL™ SL26, commercialisé par la société SEPPIC, qui est une solution aqueuse contenant entre environ 50 % et poids et 60 % en poids d'un mélange d'alkyl polyglucosides consistant en environ 70 % en poids d'un composé de formule (I), dans laquelle x est égal à environ 1,45 et R₁ représente un radical dodécyle, environ 25 % en poids d'un composé de formule (I), dans laquelle x est égal à environ 1,45 et R₁ représente un radical tétradécyle et environ 5 % en poids d'un composé de formule (I), dans laquelle x est égal à environ 1,45 et R₁ représente un radical hexadécyle.

La phase huile du latex inverse ou du microlatex inverse décrits ci-dessus, est constituée soit :
par une huile minérale commerciale contenant des hydrocarbures saturés de type paraffine, isoparaffine, cycloparaffine, présentant à température ambiante, une densité entre 0.7 et 0.9 et un point d'ébullition supérieur à 180°C, telle que par exemple, l'ISOPAR^{™} M, l'ISOPAR^{™} L, l'ISOPAR^{™}E ou l'ISOPAR^{™}G, l'EXXOL^{™} D 100 S commercialisé par EXXON ou les huiles blanches minérales conformes aux réglementations FDA 21 CFR 172.878 et FR 178.3620(a) , telles que le MARCOL^{™} 52 ou le MARCOL^{™}82, également commercialisées par EXXON.
soit par le polyisobutène hydrogéné, commercialisé en France par la société Ets B. Rossow et Cie sous le nom PARLEAM - POLYSYNLANE^{™} et cité dans Michel and Irene Ash ; Thesaurus of Chemical Products, Chemical Publishing Co , Inc. 1986 Volume I, page 211 (ISBN 0 7131 3603 0) ;
soit par l'isohexadécane qui est identifié dans Chemical Abstracts par le numéro RN = 93685-80-4, et qui est un mélange d'isoparaffines en C₁₂, C₁₆ et C₂₀ contenant au moins 97 % d'isoparaffines en C₁₆, parmi lesquelles le constituant principal est le 2,2,4,4,6,8,8-heptaméthyl nonane (RN = 4390-04-9). Il est commercialisé en France par la société Bayer ;
soit par l'isododécane, commercialisé en France par la société Bayer.
soit par le squalane qui est identifié dans Chemical Abstracts par le numéro RN = 111-01-3 et qui est un mélange d'hydrocarbures contenant plus de 80 % en poids de 2,6,10,15,19,23-hexaméthyl tétracosane. Il est commercialisé en France par la société SOPHIM, sous le nom PHYTOSQUALANE^{™} ;
soit parmi les esters d'acides gras de formule (II) :

   R₁-(C=O)-O-[[CH₂-CH[O-[C(=O)]ₘ-R₂]-CH₂-O]ₙ-[C(=O)]ₚ]_{q}-R₃ (II)
dans laquelle R₁ représente une chaîne hydrocarbonée saturée ou insaturée, linéaire ou ramifiée comportant de 7 à 30 atomes de carbone, R₂ représente indépendamment de R₁, un atome d'hydrogène, une chaîne hydrocarbonée saturée ou insaturée linéaire ou ramifiée comportant de 7 à 30 atomes de carbone, R₃ représente indépendamment de R₁ ou de R₂, un atome d'hydrogène ou une chaîne hydrocarbonée saturée ou insaturée, linéaire ou ramifiée comportant de 1 à 30 atomes de carbone, m, n, p et q sont indépendamment l'un de l'autre égaux à 0 ou à 1, étant entendu que lorsque R₃ représente un atome d'hydrogène, q est différent de 0. Comme composés de formule (II), il y a plus particulièrement les composé de formule (IIa) :

R₁-(C=O)-O-CH₂-CH[O-[C(=O)]ₘ-R₂]-CH₂-O-[C(=O)]ₚ-R₃ (IIa)

correspondant à la formule (II) telle définie précédemment dans laquelle q et n sont égaux à 1, ou un mélange de composés de formules (IIa) ;.dans ce cas il s'agit de préférence, ou bien d'un composé de formule (IIa₁) :

R₁-(C=O)-O-CH₂-CH(OH)-CH₂-OH (IIa₁)

correspondant à la formule (IIa) telle définie précédemment, dans laquelle m et p sont égaux à 0 et R₂ et R₃ représentent un atome d'hydrogène,
ou bien un composé de formule (IIa₂) :

R₁-(C=O)-O-CH₂-CH(OH)-CH₂-O-C(=O)-R₃ (IIa₂)

correspondant à la formule (IIa) telle définie précédemment dans laquelle p est égal à 1, m est égal à 0 et R₂ représente un atome d'hydrogène,
ou bien un composé de formule (IIa₃) :

R₁-(C=O)-O-CH₂-CH[O-C(=O)-R₂]-CH₂-O-C(=O)-R₃ (IIa₃)

correspondant à la formule (IIa) telle définie précédemment dans laquelle m et p sont égaux à 1,
ou bien un mélange de composés de formules (IIa₁), (IIa₂) et/ou (IIa₃).

Comme exemples composés de formules (IIa₁), (IIa₂) ou (IIa₃), il y a par exemple les triglycérides d'acides gras ou de mélanges d'acides gras tels que le mélange de triglycérides d'acides gras comportant de 6 à 10 atomes de carbone, commercialisé sous le nom SOFTENOL^{™} 3819, le mélange de triglycérides d'acides gras comportant de 8 à 10 atomes de carbone, commercialisé sous le nom SOFTENOL^{™} 3108, le mélange de triglycérides d'acides gras comportant de 8 à 18 atomes de carbone, commercialisé sous le nom SOFTENOL^{™} 3178, le mélange de triglycérides d'acides gras comportant de 12 à 18 atomes de carbone, commercialisé sous le nom SOFTENOL^{™} 3100, le mélange de triglycérides d'acides gras comportant 7 atomes de carbone commercialisé sous le nom SOF-TENOL^{™} 3107, le mélange de triglycérides d'acides gras comportant 14 atomes de carbone commercialisé sous le nom SOFTENOL^{™} 3114 ou le mélange de triglycérides d'acides gras comportant 18 atomes de carbone commercialisé sous le nom SOFTENOL^{™} 3118, le dilaurate de glycérol, le dioléate de glycérol, l'isostéarate de glycérol, le distéarate de glycérol, le monolaurate de glycérol, le monooléate de glycérol, le monoisostéarate de glycérol, le monostéarate de glycérol ou un mélange de ces composés.

Selon un autre aspect de la présente invention, celle-ci a aussi pour objet un procédé de préparation du latex inverse tel que défini précédemment, caractérisé en ce que :
a) l'on émulsionne une solution aqueuse contenant les monomères et les éventuels additifs, dans une phase huile en présence d'un ou plusieurs agents émulsifiants de type eau dans huile,
b) l'on amorce la réaction de polymérisation par introduction dans l'émulsion formée en a), d'un initiateur de radicaux libres et d'éventuellement un co-initiateur puis on la laisse se dérouler,
c) lorsque la réaction de polymérisation est terminée, l'on introduit un ou plusieurs agents émulsifiants de type huile dans eau à une température inférieure à 50°C.

Selon une variante de ce procédé, le milieu réactionnel issu de l'étape b), est concentré par distillation, avant la mise en oeuvre de l'étape c).

Selon une mise en oeuvre préférée du procédé tel que défini précédemment, la réaction de polymérisation est amorcée par un couple oxydoréducteur générateur d'ions hydrogénosulfite (HSO₃⁻), tel que le couple hydroperoxyde de cumène -métabisulfite de sodium (Na₂S₂O₅) ou le couple hydroperoxyde de cumène-chlorure de thionyle (SOCl₂) à une température inférieure ou égale à 10°C, si désiré accompagné d'un agent co-initiateur de polymérisation tel que par exemple l'azo-bis(isobutyronitrile), le dilaurylperoxyde ou le persulfate de sodium puis conduite soit de manière quasi adiabatique jusqu'à une température supérieure ou égale à 50°C, soit en contrôlant la température.

Selon un autre aspect de la présente invention, celle-ci a aussi pour objet un procédé de préparation du microlatex inverse tel que défini précédemment, caractérisé en ce que :
a) l'on émulsionne une solution aqueuse contenant les monomères et les éventuels additifs, dans une phase huile en présence d'un ou plusieurs agents émulsifiants de façon à former une microémulsion,
b) l'on amorce la réaction de polymérisation par introduction dans l'émulsion formée en a), d'un initiateur de radicaux libres et d'éventuellement un co-initiateur puis on la laisse se dérouler,
le polymère tel que défini précédemment, peut être isolé du latex inverse ou du microlatex inverse précédents, par les différents procédés connus de l'homme du métier, comme la technique de précipitation qui consiste à couler le latex ou le microlatex dans un large excès de solvant tel que l'acétone, l'isopropanol ou l'éthanol, ou comme la technique de séchage par aspersion, dite de "Spray drying", qui est décrite dans la publication internationale WO 00/01757.

Le polymère, le latex inverse de polymère ou le microlatex inverse de polymère objets de la présente invention, peuvent être mis en oeuvre par exemple comme épaississant de compositions cosmétiques ou pharmaceutiques, comme épaississant de pâtes d'impression pour l'industrie textile, comme épaississants de détergents industriels ou ménagers, comme additifs pour la récupération assistée du pétrole, comme modificateur de rhéologie pour les boues de forage ou encore comme floculants pour le traitement des eaux.

Les exemples suivants illustrent la présente invention sans toutefois la limiter.

### Exemple A (comparatif) : Emulsion inverse d'un copolymère de 2-méthyl-2-[(1-oxo-2-propényl)aminol-1-propanesulfonate de sodium et d'acrylamide (ATBS - AA)

### Mode opératoire

On charge dans un bêcher sous agitation :
- 80 g d'eau permutée,
- 211,6 g d'une solution aqueuse à 50 % en poids d'acrylamide,
- 93 g d'une solution aqueuse d'hydroxyde de sodium à 48 % en poids,
- 308,4 g d'acide 2-méthyl-2-[(1-oxo-2-propényl)amino]-1-propanesulfonique (commercialisée en France par CIM chemicals), et
- 0,47 g d'une solution commerciale à 40 % en poids de diéthylènetriamine pentaacétate de sodium,

Parallèlement, on prépare une phase organique en introduisant dans un bêcher successivement et sous agitation :
- 220 g d'ISOPAR^{™} M
- 27,5 g de MONTANE^{™} 80 VG (monooléate de sorbitan commercialisé par la société SEPPIC),

La phase aqueuse est introduite progressivement dans la phase organique puis soumise à une agitation mécanique violente de type ULTRA TURRAX^{™}, commercialisé par IKA. L'émulsion obtenue est alors transférée dans un réacteur de polymérisation et est soumise à un barbotage d'azote important, pour éliminer l'oxygène. On introduit alors 5 ml d'une solution à 0,3 % en poids d'hydroperoxyde de cumène dans de l'ISOPAR^{™} M.

Après le temps suffisant pour une bonne homogénéisation de la solution, on introduit 25 ml d'une solution aqueuse à 0,3 % en poids de métabisulfite de sodium, à raison de 0,5 ml / minute, en laissant monter la température jusqu'à stabilisation de cette dernière. Le milieu réactionnel est maintenu à cette température pendant 90 minutes, puis l'ensemble est refroidi jusqu'à environ 30°C et on ajoute enfin 50g de SIMULSOL^{™} P7 (alcool laurique polyéthoxylé 7OE), pour obtenir l'émulsion désirée.

### Evaluation des propriétés du latex obtenu

Viscosité à 25°C du latex à 1 % dans l'eau (Brookfield RVT, Mobile 6, vitesse 5) : η = 11200 mPas ;

Viscosité à 25°C du latex à 1 % dans l'eau + 0,1% NaCl (Brookfield RVT, Mobile 6, vitesse 5) : η = 6320 mPas ;

### Exemple 1 (selon l'invention) : Emulsion inverse d'un copolymère de 2-méthyl-2-[(1-oxo-2-propényl) amino]-1-propanesulfonate de sodium et de N-[2-hydroxy 1,1-bis(hydroxyméthyl) éthyl] propénamide (ATBS-THAM)

### Mode opératoire

On charge dans un bêcher sous agitation :
- 356,2 g d'eau permutée,
- 221,4 g d'une solution à 55 % en poids de 2-méthyl-2-[(1-oxo-2-propényl) amino]-1-propanesulfonate de sodium ,
- 100,5 g de N-[2-hydroxy 1,1-bis(hydroxyméthyl) éthyl] propénamide et
- 0,45 g d'une solution commerciale à 40 % en poids de diéthylènetriamine pentaacétate de sodium,

Parallèlement, on prépare une phase organique en introduisant dans un bêcher successivement et sous agitation :
- 218 g d'ISOPAR^{™} M et
- 24,2 g de MONTANE^{™} 80 VG.

La phase aqueuse est introduite progressivement dans la phase organique puis soumise à une agitation mécanique violente de type ULTRA TURRAX^{™}. L'émulsion obtenue est alors transférée dans un réacteur de polymérisation, est soumise à un barbotage d'azote important, pour éliminer l'oxygène. On introduit alors 5 ml d'une solution à 0,3 % en poids d'hydroperoxyde de cumène dans de l'ISOPAR^{™} M.

Après le temps suffisant pour une bonne homogénéisation de la solution, on introduit 25 ml d'une solution aqueuse à 0,3 % en poids de métabisulfite de sodium, à raison de 0,5 ml / minute en laissant monter la température jusqu'à stabilisation de cette dernière. Le milieu réactionnel est maintenu à cette température pendant 90 minutes, puis l'ensemble est refroidi jusqu'à environ 30°C et on ajoute enfin 50g de SIMULSOL^{™} P7, pour obtenir l'émulsion désirée.

### Evaluation des propriétés du latex obtenu

Viscosité à 25°C du latex à 1 % dans l'eau (Brookfield RVT, Mobile 6, vitesse 5) : η = 52 600 mPas ;

Viscosité à 25°C du latex à 1 % dans l'eau + 0,1 % NaCl (Brookfield RVT, Mobile 6, vitesse 5) : η = 18 000 mPas.

### Exemple B (comparatif) : Emulsion inverse d'un copolymère de 2-méthyl-2-[(1-oxo 2-propényl) amino]-1-propanesulfonate de sodium et d'acrylamide réticulé au MBA (ATBS-AA)

### Mode opératoire

On charge dans un bêcher sous agitation :
- 80 g d'eau permutée,
- 211,6 g d'une solution aqueuse à 50 % en poids d'acrylamide,
- 93 g d'une solution aqueuse d'hydroxyde de sodium à 48 % en poids,
- 308,4 g d'acide 2-méthyl-2-[(1-oxo-2-propényl)amino]-1-propanesulfonique (commercialisée en France par CIM chemicals),
- 0,016 g de méthylène bis(acrylamide) (MBA) et
- 0,47 g d'une solution commerciale à 40 % en poids de diéthylènetriamine pentaacétate de sodium,

Parallèlement, on prépare une phase organique en introduisant dans un bêcher successivement et sous agitation :
- 220 g d'ISOPAR^{™} M
- 27,5 g de MONTANE^{™} 80 VG,

La phase aqueuse est introduite progressivement dans la phase organique puis soumise à une agitation mécanique violente de type ULTRA TURRAX^{™}. L'émulsion obtenue est alors transférée dans un réacteur de polymérisation, est soumise à un barbotage d'azote important, pour éliminer l'oxygène. On introduit alors 5 ml d'une solution à 0,3 % en poids d'hydroperoxyde de cumène dans de l'ISOPAR^{™} M.

Après le temps suffisant pour une bonne homogénéisation de la solution, on introduit 25 ml d'une solution aqueuse à 0,3 % en poids de métabisulfite de sodium, à raison de 0,5 ml / minute en laissant monter la température jusqu'à stabilisation de cette dernière. Le milieu réactionnel est maintenu à cette température pendant 90 minutes, puis l'ensemble est refroidi jusqu'environ 30°C et on ajoute enfin 50 g de SIMULSOL^{™} P7, pour obtenir l'émulsion désirée.

### Evaluation des propriétés du latex inverse obtenu

Viscosité à 25°C du latex à 1 % dans l'eau (Brookfield RVT, Mobile 6, vitesse 5) : η = 40 000 mPas ;

Viscosité à 25°C du latex à 1 % dans l'eau + 0,1 % NaCl (Brookfield RVT, Mobile 6, vitesse 5) : η = 7 200 mPas ;

### Exemple 2 (selon l'invention) : Emulsion inverse d'un copolymère de 2-méthyl-2-[(1-oxo 2-propényl) aminol-1-propanesulfonate de sodium et de N-[2-hydroxy 1,1-bis(hydroxyméthyl) éthyl] propénamide réticulé au MBA (ATBS - THAM)

### Mode opératoire

On charge dans un bêcher sous agitation :
- 356,2 g d'eau permutée,
- 221,4 g d'une solution à 55 % en poids de 2-méthyl-2-[(1-oxo-2-propényl)amino]-1-propanesulfonate de sodium,
- 100,5 g de N-[2-hydroxy 1,1-bis(hydroxyméthyl) éthyl] propénamide
- 0,016 g de méthylène bis(acrylamide) (MBA) et
- 0,45 g d'une solution commerciale à 40 % en poids de diéthylènetriamine pentaacétate de sodium,

Parallèlement, on prépare une phase organique en introduisant dans un bêcher successivement et sous agitation :
- 218 g d'ISOPAR^{™} M et
- 24,2 g de MONTANE^{™} 80 VG.

La phase aqueuse est introduite progressivement dans la phase organique puis soumise à une agitation mécanique violente de type ULTRA TURRAX^{™}. L'émulsion obtenue est alors transférée dans un réacteur de polymérisation, est soumise à un barbotage d'azote important, pour éliminer l'oxygène. On introduit alors 5 ml d'une solution à 0,3 % en poids d'hydroperoxyde de cumène dans de l'ISOPAR^{™} M.

Après le temps suffisant pour une bonne homogénéisation de la solution, on introduit 25 ml d'une solution aqueuse à 0,3 % en poids de métabisulfite de sodium, à raison de 0,5 ml / minute en laissant monter la température jusqu'à stabilisation de cette dernière. Le milieu réactionnel est maintenu à cette température pendant 90 minutes, puis l'ensemble est refroidi jusqu'environ 30 °C et on ajoute enfin 50g de SIMULSOL^{™} P7, pour obtenir l'émulsion désirée.

### Evaluation des propriétés du latex obtenu

Viscosité à 25°C du latex à 1 % dans l'eau (Brookfield RVT, Mobile 6, vitesse 5) : η = 65 400 mPas ;

Viscosité à 25°C du latex à 1 % dans l'eau + 0,1 % NaCl (Brookfield RVT, Mobile 6, vitesse 5) : η = 14 000 mPas.

### Exemple 3 (selon l'invention) : Micro-émulsion inverse d'un copolymère de 2-méthyl-2-[(1-oxo 2-propényl) aminol-1-propanesulfonate de sodium et de N-[2-hydroxy 1,1-bis(hydroxyméthyl) éthyl] propénamide réticulé au MBA (ATBS - THAM)

### Mode opératoire

On charge dans un bêcher sous agitation :
- 114,8 g d'eau permutée,
- 67,2 g d'une solution à 55 % en poids de 2-méthyl-2-[(1-oxo 2-propényl) amino]-1-propanesulfonate de sodium,
- 30,5 g de N-[2-hydroxy 1,1-bis(hydroxyméthyl) éthyl] propénamide et
- 0,025 g de méthylène bis(acrylamide) (MBA).

Parallèlement, on prépare une phase organique en introduisant dans un bêcher successivement et sous agitation :
- 212,5 g d'ISOPAR^{™} M,
- 30,6 g de MONTANE^{™} 83 (sesquioléate de sorbitan) et
- 45,4 g de MONTANOX^{™} 80 (oléate de sorbitan polyéthoxylé 20 OE).

La phase aqueuse est introduite progressivement dans la phase organique puis soumise à une agitation mécanique violente de type ULTRA TURRAX^{™}. L'émulsion obtenue est alors transférée dans un réacteur de polymérisation, est soumise à un barbotage d'azote important, pour éliminer l'oxygène. On introduit alors 5 ml d'une solution à 0,3 % en poids d'hydroperoxyde de cumène dans de l'ISOPAR^{™} M.

Après le temps suffisant pour une bonne homogénéisation de la solution, on introduit 25 ml d'une solution aqueuse à 0,3 % en poids de métabisulfite de sodium, à raison de 0,5 ml / minute en laissant monter la température jusqu'à stabilisation de cette dernière. Le milieu réactionnel est maintenu à cette température pendant 90 minutes, puis l'ensemble est refroidi jusqu'à environ 30°C, pour obtenir l'émulsion désirée.

### Evaluation des propriétés du microlatex obtenu

Viscosité à 25°C du latex à 1 % dans l'eau (Brookfield RVT, Mobile 6, vitesse 5) : η = 65 400 mPas ;

Viscosité à 25°C du latex à 1 % dans l'eau + 0,1 % NaCl (Brookfield RVT, Mobile 6, vitesse 5) : η = 14 000 mPas.

### Analyse des résultats

Les viscosités, mesurées à 25 °C (Brookfield RVT, Mobile 6, vitesse 5 ; en mPas), sont consignées dans le tableau suivant ; leur comparaison permet de démontrer que l'amélioration de la tenue au sel des latex inverse selon l'invention, est inhérente à la présence monomère THAM dans le polymère.

Elle fait apparaître aussi que de façon inattendue, même les polymères de THAM non réticulés développent de la viscosité en solution aqueuse :

| Exemple N° | Viscosité η du latex à 1 % dans l'eau | Viscosité η₁ du latex à 1 % dans l'eau + 0,1 % NaCl |
|---|---|---|
| A | 11200 | 6320 |
| 1 | 52600 | 18000 |
| B | 40000 | 7200 |
| 2 | 65400 | 14000 |
| 3 | 52600 | 18000 |

## Revendications

1. Composition comprenant une phase huile, une phase aqueuse, au moins un agent émulsifiant de type eau dans huile (E/H), au moins un agent émulsifiant de type huile dans eau (H/E), sous forme soit d'ùn latex inverse auto-inversible comprenant de 20 % à 70 % en poids, et de préférence de 25 % à 40 % en poids, d'un polymère linéaire ou réticulé, **caractérisé en ce qu'**il est susceptible d'être obtenu, soit par homopolymérisation du N-[2-hydroxy-1,1-bis(hydroxyméthyl)-éthyl]-propénamide, soit par copolymérisation du N-[2-hydroxy-1,1-bis(hydroxyméthyl)-éthyl]-propénamide avec un ou plusieurs monomères choisis parmi les monomères cationiques, les monomères comportant au moins une fonction acide fort, partiellement salifiée ou totalement salifiée, les monomères comportant au moins une fonction acide faible, partiellement salifiée ou totalement salifiée ou les monomères neutres, soit d'un microlatex inverse auto-inversible comprenant de 10 % à 50 % en poids, et de préférence de 10 % à 30 % en poids dudit polymère.

2. Composition telle que définie à la revendication 1, pour laquelle, le monomère comportant une fonction acide fort, est choisi parmi l'acide styrènesulfonique, le méthacrylate de (2-sulfo éthyle), l'acide styrènephosphonique, partiellement ou totalement salifiée ou de préférence l'acide 2-méthyl-2-[(1-oxo 2-propènyl) amino]-1-propanesulfonique partiellement ou totalement salifiée sous forme d'un sel de métal alcalin, de sel d'ammonium, d'un sel d'un amino alcool ou d'un sel d'amino acide.

3. Composition telle que définie à l'une quelconque des revendications 1 ou 2, pour laquelle, le monomère comportant une fonction acide faible est choisi parmi l'acide acrylique, l'acide méthacrylique, l'acide itaconique, l'acide maléique partiellement ou totalement salifié ou l'acide 3-méthyl 3-[(1-oxo 2-propènyl) amino] butanoïque, partiellement salifié ou totalement salifié.

4. Composition telle que définie à l'une quelconque des revendications 1 à 3, pour laquelle, le monomère neutre, est choisi parmi l'acrylamide, le méthacrylamide, le vinylpyrrolidone, le diacétoneacrylamide, l'acrylate de (2-hydroxy éthyle), l'acrylate de (2,3-dihydroxy propyle), le méthacrylate de (2-hydroxy éthyle), le méthacrylate de (2,3-dihydroxy propyle), ou un dérivé éthoxylé de poids moléculaire compris entre 400 et 1000, de chacun de ces esters.

5. Composition telle que définie à l'une quelconque des revendications 1 à 4, pour laquelle, le monomère cationique, est choisi parmi le chlorure de 2,N,N,N-tétraméthyl 2-[(1-oxo 2-propènyl) amino] propanammonium (AMPTAC), le chlorure de 2,N,N-triméthyl 2-[(1-oxo 2-propènyl) amino] propanammonium, le chlorure de N,N,N-triméthyl 3-[(1-oxo 2-propènyl) amino] propanammonium (APTAC), le chlorure de diallyl diméthylammonium (DADMAC), le chlorure de N,N,N-triméthyl 2-[(1-oxo 2-propènyl)] éthanammonium, le chlorure de N,N,N-triméthyl 2-[(1-oxo 2- méthyl 2-propènyl)] éthanammonium, le N-[2-(diméthylamino) 1,1-diméthyl] acrylamide, le N-[2-(méthylamino) 1,1-diméthyl] acrylamide, l'acrylate de 2-(diméthylamino) éthyle, le méthacrylate de 2-(diméthylamino) éthyle ou le N-[3-(diméthylamino) propyl] acrylamide.

6. Composition telle que définie à l'une des revendications 1 à 5, pour laquelle, le polymère est choisi parmi les polymères suivants :
les homopolymères de THAM,
les copolymères de THAM et d'acide 2-méthyl 2-[(1-oxo 2-propènyl) amino] 1-propanesulfonique partiellement ou totalement salifié sous forme de sel de sodium ou de sel d'ammonium,
les copolymères de THAM et d'acide acrylique partiellement salifié sous forme de sel de sodium ou de sel d'ammonium,
les copolymères de THAM et d'acide méthacrylique partiellement salifié sous forme de sel de sodium ou de sel d'ammonium,
les terpolymères de THAM, d'acide acrylique et d'acrylamide partiellement salifié sous forme de sel de sodium ou de sel d'ammonium,
les copolymères de THAM et d'acide 2-méthyl 2-[(1-oxo 2-propènyl) amino] 1-propanesulfonique partiellement ou totalement salifié sous forme de sel de sodium ou de sel d'ammonium,
les copolymères de THAM et d'AMPTAC,
les copolymères de THAM et d'APTAC,
les copolymères de THAM et de DADMAC,
les copolymères de THAM et d'acrylate de 2-(diméthylamino) éthyle,
les copolymères de THAM et de méthacrylate de 2-(diméthylamino) éthyle,
les terpolymères de THAM, d'AMPTAC et d'acrylamide,
les terpolymères de THAM, d'AMPTAC et de diacétoneacrylamide,
les terpolymères de THAM, d'APTAC et d'acrylamide,
les terpolymères de THAM, de DADMAC et de diacétoneacrylamide,
les terpolymères de THAM, d'acrylate de 2-(diméthylamino) éthyle et d'acrylamide, ou
les terpolymères de THAM, de méthacrylate de 2-(diméthylamino) éthyle et de diacétoneacrylamide.

7. Polymère linéaire, tel que défini à l'une quelconque des revendications 1 à 6.

8. Procédé de préparation du latex inverse tel que défini à l'une des revendications 1 à 6, **caractérisé en ce que** :
a) l'on émulsionne une solution aqueuse contenant les monomères et les éventuels additifs, dans une phase huile en présence d'un ou plusieurs agents émulsifiants de type eau dans huile,
b) l'on amorce la réaction de polymérisation par introduction dans l'émulsion formée en a), d'un initiateur de radicaux libres et d'éventuellement un co-initiateur puis on la laisse se dérouler,
c) lorsque la réaction de polymérisation est terminée, l'on introduit un ou plusieurs agents émulsifiants de type huile dans eau à une température inférieure à 50°C.

9. Procédé de préparation du microlatex inverse tel que défini à l'une des revendications 1 à 6, **caractérisé en ce que** :
a) l'on émulsionne une solution aqueuse contenant les monomères et les éventuels additifs, dans une phase huile en présence d'un ou plusieurs agents émulsifiants de façon à former une microémulsion,
b) l'on amorce la réaction de polymérisation par introduction dans l'émulsion formée en a), d'un initiateur de radicaux libres et d'éventuellement un co-initiateur puis on la laisse se dérouler.

10. Utilisation du latex inverse de polymère ou du microlatex inverse de polymère, tels que définis à l'une quelconque des revendications 1 à 7, comme épaississant de compositions cosmétiques, ou pharmaceutiques, comme épaississant de pâtes d'impression pour l'industrie textile, comme épaississants de détergents industriels ou ménagers, comme additifs pour la récupération assistée du pétrole, comme modificateur de rhéologie pour les boues de forage ou comme floculants pour le traitement des eaux.

## Claims

1. Composition comprising an oil phase, an aqueous phase, at least one emulsifying agent of water-in-oil (W/O) type and at least one emulsifying agent of oil-in-water (O/W) type, in the form either of a self-invertible inverse latex comprising from 20% to 70% by weight, and preferably from 25% to 40% by weight, of a linear or crosslinked polymer, **characterized in that** it is capable of being obtained either by homopolymerization of N-[2-hydroxy-1,1-bis(hydroxymethyl)ethyl]propenamide or by copolymerization of N-[2-hydroxy-1,1-bis(hydroxymethyl)ethyl]propenamide with one or more monomers chosen from cationic monomers, monomers comprising at least one, partially salified or completely salified, strong acid functional group, monomers comprising at least one, partially salified or completely salified, weak acid functional group, or neutral monomers, or of a self-invertible inverse microlatex comprising from 10% to 50% by weight, and preferably from 10% to 30% by weight, of said polymer.

2. Composition as defined in Claim 1, for which the monomer comprising a strong acid functional group is chosen from styrenesulfonic acid, 2-sulfoethyl methacrylate, styrenephosphonic acid, partially or completely salified, or, preferably, 2-methyl-2-[(1-oxo-2-propenyl)amino]-1-propanesulfonic acid, partially or completely salified in the form of an alkali metal salt, of the ammonium salt, of a salt of an amino alcohol or of an amino acid salt.

3. Composition as defined in either one of Claims 1 and 2, for which the monomer comprising a weak acid functional group is chosen from acrylic acid, methacrylic acid, itaconic acid, maleic acid, partially or completely salified, or 3-methyl-3-[(1-oxo-2-propenyl)amino]butanoic acid, partially salified or completely salified.

4. Composition as defined in any one of Claims 1 to 3, for which the neutral monomer is chosen from acrylamide, methacrylamide, vinylpyrrolidone, diacetone acrylamide, 2-hydroxyethyl acrylate, 2,3-dihydroxypropyl acrylate, 2-hydroxyethyl methacrylate, 2,3-dihydroxypropyl methacrylate or an ethoxylated derivative, with a molecular weight of between 400 and 1000, of each of these esters.

5. Composition as defined in any one of Claims 1 to 4, for which the cationic monomer is chosen from 2,N,N,N-tetramethyl-2-[(1-oxo-2-propenyl)amino]-propanammonium chloride (AMPTAC), 2,N,N-trimethyl-2-[(1-oxo-2-propenyl)amino]propanammonium chloride, N,N,N-trimethyl-3-[(1-oxo-2-propenyl)amino]propanammonium chloride (APTAC), diallyldimethylammonium chloride (DADMAC), N,N,N-trimethyl-2-[(1-oxo-2-propenyl)]ethanammonium chloride, N,N,N-trimethyl-2-[(1-oxo-2-methyl-2-propenyl)]ethanammonium chloride, N-[2-(dimethylamino)-1,1-dimethyl]acrylamide, N-[2-(methylamino)-1,1-dimethyl]acrylamide, 2-(dimethylamino)ethyl acrylate, 2-(dimethylamino)ethyl methacrylate or N-[3-(dimethylamino)propyl]acrylamide.

6. Composition as defined in one of Claims 1 to 5, for which the polymer is chosen from the following polymers:
homopolymers of THAM,
copolymers of THAM and of 2-methyl-2-[(1-oxo-2-propenyl)amino]-1-propanesulfonic acid, partially or completely salified in the sodium salt or ammonium salt form,
copolymers of THAM and of acrylic acid, partially salified in the sodium salt or ammonium salt form,
copolymers of THAM and of methacrylic acid, partially salified in the sodium salt or ammonium salt form,
terpolymers of THAM, of acrylic acid and of acrylamide, partially salified in the sodium salt or ammonium salt form,
copolymers of THAM and of 2-methyl-2-[(1-oxo-2-propenyl)amino]-1-propanesulfonic acid, partially or completely salified in the sodium salt or ammonium salt form,
copolymers of THAM and of AMPTAC,
copolymers of THAM and of APTAC,
copolymers of THAM and of DADMAC,
copolymers of THAM and of 2-(dimethylamino)ethyl acrylate,
copolymers of THAM and of 2-(dimethylamino)ethyl methacrylate,
terpolymers of THAM, of AMPTAC and of acrylamide,
terpolymers of THAM, of AMPTAC and of diacetone acrylamide,
terpolymers of THAM, of APTAC and of acrylamide,
terpolymers of THAM, of DADMAC and of diacetone acrylamide,
terpolymers of THAM, of 2-(dimethylamino)ethyl acrylate and of acrylamide, or
terpolymers of THAM, of 2-(dimethylamino)ethyl methacrylate and of diacetone acrylamide.

7. Linear polymer as defined in any one of Claims 1 to 6.

8. Process for the preparation of the inverse latex as defined in one of Claims 1 to 6, **characterized in that:**
a) an aqueous solution comprising the monomers and the optional additives is emulsified in an oily phase in the presence of one or more emulsifying agents of water-in-oil type,
b) the polymerization reaction is initiated by introduction, into the emulsion formed in a), of a free-radical initiator and optionally of a coinitiator, and then the polymerization reaction is allowed to take place,
c) when the polymerization reaction is finished, one or more emulsifying agents of oil-in-water type is/are introduced at a temperature of below 50°C.

9. Process for the preparation of the inverse microlatex as defined in one of Claims 1 to 6, **characterized in that:**
a) an aqueous solution comprising the monomers and the optional additives is emulsified in an oil phase in the presence of one or more emulsifying agents, so as to form a microemulsion,
b) the polymerization reaction is initiated by introduction, into the emulsion formed in a), of a free-radical initiator and optionally of a coinitiator, and then the polymerization reaction is allowed to take place.

10. Use of the inverse polymer latex or of the inverse polymer microlatex as defined in any one of Claims 1 to 7, as thickener for cosmetic or pharmaceutical compositions, as thickener for printing pastes for the textile industry, as thickeners for industrial or household detergents, as additives for the assisted recovery of oil, as rheology modifier for drilling muds or as flocculants for water treatment.

## Patentansprüche

1. Zusammensetzung, die eine Ölphase, eine Wasserphase, mindestens einen Emulsionsbildner vom Typ Wasser-in-Öl (W/O), mindestens einen Emulsionsbildner vom Typ Öl-in-Wasser (O/W) umfasst, entweder in Form eines autoinvertierbaren inversen Latex, der 20 Gew.-% bis 70 Gew.-%, und bevorzugt 25 Gew.-% bis 40 Gew.-% eines linearen oder vernetzten Polymers umfasst, **dadurch gekennzeichnet, dass** es geeignet ist, entweder durch Homopolymerisation des N-[2-Hydroxy-1,1-bis(hydroxymethyl)ethyl]-propenamids oder durch Copolymerisation des N-[2-Hydroxy-1,1-bis(hydroxymethyl)ethyl]-propenamids mit einem oder mehreren Monomeren erhalten zu werden, ausgewählt aus den kationischen Monomeren, den Monomeren, die mindestens eine starke Säurefunktion umfassen, die teilweise in ein Salz überführt ist oder vollständig in ein Salz überführt ist, den Monomeren, die mindestens eine schwache Säurefunktion umfassen, die teilweise in ein Salz überführt ist oder vollständig in ein Salz überführt ist, oder den neutralen Monomeren, oder eines autoinversiblen inversen Mikrolatex, der 10 Gew.-% bis 50 Gew.-%, und bevorzugt 10 Gew.-% bis 30 Gew.-% des Polymers umfasst.

2. Zusammensetzung wie in Anspruch 1 definiert, für die das Monomer, das eine starke Säurefunktion umfasst, ausgewählt ist aus Styrolsulfonsäure, 2-Sulfoethylmethacrylat, Styrolphosphonsäure, die teilweise oder vollständig in ein Salz überführt ist, oder bevorzugt 2-Methyl-2-[(1-oxo-2-propenyl)amino]-1-propansulfonsäure, die teilweise oder vollständig in ein Salz überführt ist, in Form eines Alkalimetallsalzes, eines Ammoniumsalzes, eines Aminoalkoholsalzes oder eines Aminosäuresalzes.

3. Zusammensetzung wie in einem der Ansprüche 1 oder 2 definiert, wobei das Monomer, das eine schwache Säurefunktion umfasst, ausgewählt ist aus Acrylsäure, Methacrylsäure, Itaconsäure, Maleinsäure, die teilweise oder vollständig in ein Salz überführt ist, oder 3-Methyl-3-[(1-oxo-2-propenyl)amino]butansäure, die teilweise in ein Salz überführt ist oder vollständig in ein Salz überführt ist.

4. Zusammensetzung, wie in einem der Ansprüche 1 bis 3 definiert, wobei das neutrale Monomer ausgewählt ist aus Acrylamid, Methacrylamid, Vinylpyrrolidon, Diacetoneacrylamid, 2-Hydroxyethylacrylat, 2,3-Dihydroxypropylacrylat, 2-Hydroxyethylmethacrylat, 2,3-Dihydroxypropylmethacrylat oder einem ethoxylierten Derivat jedes dieser Ester mit einem Molekulargewicht im Bereich zwischen 400 und 1.000.

5. Zusammensetzung wie in einem der Ansprüche 1 bis 4 definiert, wobei das kationische Monomer ausgewählt ist aus 2-N,N,N-tetramethyl-2-[(1-oxo-2-propenyl)amino]propanammoniumchlorid (AMPTAC), 2-N,N-trimethyl-2-[(1-oxo-2-propenyl)amino]propanammoniumchlorid, N,N,N-trimethyl-3-[(1-oxo-2-propenyl)amino]propanammoniumchlorid (APTAC), Diallyldimethylammoniumchlorid (DADMAC), N,N,N-trimethyl-2-[(1-oxo-2-propenyl)]ethanammoniumchlorid, N,N,N-trimethyl-2-[(1-oxo-2-methyl-2-propeny))]ethanammoniumchlorid, N-[2-(dimethylamino)1,1-dimethyl]acrylamid, N-[2-(methylamino)-1,1-dimethyl]acrylamid, 2-(dimethylamino)ethylacrylat, 2-(dimethylamino)ethylmethacrylat oder N-[3-(dimethylamino)propyl]acrylamid.

6. Zusammensetzung wie in einem der Ansprüche 1 bis 5 definiert, wobei das Polymer ausgewählt ist aus den folgenden Polymeren:
Homopolymere von THAM,
Copolymere von THAM und 2-Methyl-2-[(1-oxo-2-propenyl)amino]1-propansulfonsäure, die teilweise oder vollständig in ein Natriumsalz oder ein Ammoniumsalz überführt wurde,
Copolymere von THAM und Acrylsäure, die teilweise in ein Natriumsalz oder ein Ammoniumsalz überführt wurde,
Copolymere von THAM und Methacrylsäure, die teilweise in ein Natriumsalz oder ein Ammoniumsalz überführt wurde,
Terpolymere von THAM, Acrylsäure und Acrylamid, das teilweise in ein Natriumsalzes oder ein Ammoniumsalz überführt wurde,
Copolymere von THAM und 2-Methyl-2-[(1-oxo-2-propenyl)amino]1-propansulfonsäure, die teilweise oder vollständig in ein Natriumsalz oder ein Ammoniumsalz überführt wurde,
Copolymere von THAM und AMPTAC,
Copolymere von THAM und APTAC,
Copolymere von THAM und DADMAC,
Copolymere von THAM und 2-Dimethylaminoethylacrylat,
Copolymere von THAM und 2-Dimethylaminoethylmethacrylat,
Terpolymere von THAM, AMPTAC und Acrylamid,
Terpolymere von THAM, AMPTAC und Diacetonacrylamid,
Terpolymere von THAM, APTAC und Acrylamid,
Terpolymere von THAM, DADMAC und Diacetonacrylamid,
Terpolymere von THAM, 2-Dimethylaminoethylacrylat und Acrylamid, oder
Terpolymere von THAM, 2-Dimethylaminoethylmethacrylat und Diacetonacrylamid.

7. Lineares Polymer wie in einem der Ansprüche 1 bis 6 definiert.

8. Verfahren zur Herstellung des inversen Latex, wie in einem der Ansprüche 1 bis 6 definiert, **dadurch gekennzeichnet, dass:**
a) eine wässrige Lösung, die die Monomere und gegebenenfalls die Hilfsstoffe enthält, in einer Ölphase in Gegenwart eines oder mehrerer Emulsionsbildners vom Typ Wasser-in-Öl emulgiert wird,
b) die Polymerisationsreaktion durch Einführen eines Radikalinitiators und gegebenenfalls eines Coinitiators in die Emulsion, die in a) gebildet wurde, gestartet, dann ablaufen gelassen wird,
c) wenn die Polymerisationsreaktion beendet ist, ein oder mehrere Emulsionsbildner vom Typ Öl-in-Wasser bei einer Temperatur von weniger als 50 °C eingeführt werden.

9. Verfahren zur Herstellung des inversen Mikrolatex, wie in einem der Ansprüche 1 bis 6 definiert, **dadurch gekennzeichnet, dass:**
a) eine wässrige Lösung, die die Monomere und gegebenenfalls die Hilfsstoffe enthält, in einer Ölphase in Gegenwart eines oder mehrerer Emulsionsbildners emulgiert wird, um eine Mikroemulsion zu bilden,
b) die Polymerisationsreaktion durch Einführen eines Radikalinitiators und gegebenenfalls eines Coinitiators in die Emulsion, die in a) gebildet wurde, gestartet, dann ablaufen gelassen wird.

10. Verwendung des inversen Polymerlatex oder des inversen Polymermikrolatex, wie in einem der Ansprüche 1 bis 7 definiert, als Verdickungsmittel für kosmetische oder pharmazeutische Zusammensetzungen, als Verdickungsmittel für Druckpasten für die Textilindustrie, als Verdickungsmittel für Industrie- und Haushaltsdetergenzien, als Hilfsstoffe für die Erdölgewinnung mit Tertiärverfahren, als Rheologiemodifikator für die Bohrschlämme oder als Flokkulationsmittel zur Wasseraufbereitung.
